# EUROPEAN PATENT APPLICATION

(11) **EP 4 460 033 A1**
(43) Date of publication of application: **06.11.2024**
(21) Application number: 22912960.6
(22) Date of filing: 02.03.2022
(51) Int. Cl.: H04Q 11/00

(54) **DATA TRANSMISSION METHOD, APPARATUS, STORAGE MEDIUM, AND ELECTRONIC APPARATUS**

(30) Priority: 28.12.2021 CN 202111633642
(71) Applicant: ZTE Corporation, Shenzhen, Guangdong 518057 (CN)
(72) Inventor: ZHANG, Weiliang, Shenzhen, Guangdong 518057 (CN); HUANG, Xingang, Shenzhen, Guangdong 518057 (CN); YUAN, Liquan, Shenzhen, Guangdong 518057 (CN)
(74) Representative: Mozzi, Matteo
(86) International application number: PCT/CN2022/078853
(87) International publication number: WO 2023/123654

(57) **Abstract**

Provided in the embodiments of the present invention are a data transmission method and apparatus, and a storage medium and an electronic apparatus. The method includes: synchronization information is sent to an Optical Network Unit (ONU) by an Optical Line Terminal (OLT), so as to allow the ONU to set a function synchronous with the OLT based on the synchronization information; and target management information is encapsulated into a target frame, and the target frame is sent to the ONU on a time slot in which the target frame is allowed to be sent by the OLT.

## Description

### Cross-Reference to Related Application

The present invention is based upon and claims priority to Chinese Patent Application No. CN202111633642.1 filed on December 28, 2021 and entitled "Data Transmission Method and Apparatus, and Storage Medium and Electronic Apparatus", the invention of which is hereby incorporated by reference in its entirety.

### Technical Field

Embodiments of the present invention relate to the field of communications, and specifically to a data transmission method and apparatus, and a storage medium and an electronic apparatus.

### Background

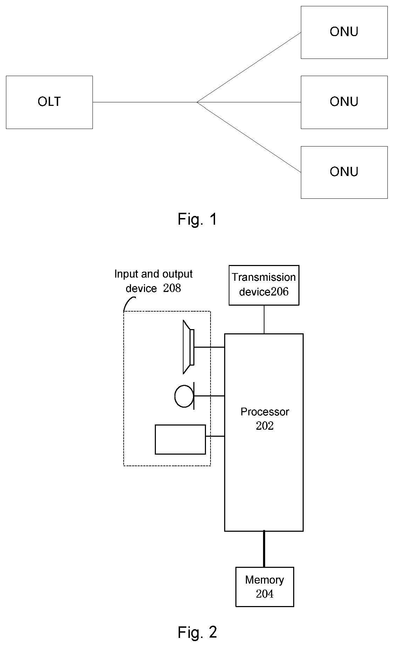

Existing passive optical networks include an Institute for Electrical and Electronic Engineers Ethernet Passive Optical Network (IEEE EPON) series and an International Telecommunications Union-Telecommunications standardization sector Gigabit Passive Optical Network (ITU-T GPON) series. In terms of technical characteristics as well as technological evolution, the two series are essentially identical. A PON architecture is shown in Fig. 1, and is a point-to-multipoint network topology. One Optical Line Terminal (OLT) is connected to a plurality of Optical Network Units (ONU) through a point-to-multipoint Optical Distribution Network (ODN), a downlink direction (from the OLT to the ONU) operates in a manner of Time Division Multiplexing (TDM), and an uplink direction (from the ONU to the OLT) operates in a manner of Time Division Multiplexing Access (TDMA).

Although the total amount of PON market is large, the IEEE EPON series and the ITU-T GPON series still need to perform independent product and component development when sharing the PON market. For example, optical modules are different, Media Access Control (MAC) chips are different, system products are different, and management systems are different, such that costs are still relatively high. In the related art, different standards of PONs cannot be fused, such that independent products and components need to be developed for different standards of PONs, resulting in high development costs and complex operations.

In view of the above problems in the related art, no effective solution has been proposed yet.

### Summary

Embodiments of the present invention provide a data transmission method and apparatus, and a storage medium and an electronic apparatus, to at least solve the problems in the related art of high development costs and complex operations caused by the need of development of independent products and components for different standards of PONs.

An embodiment of the present invention provides a data transmission method, including: synchronization information is sent to an ONU by an OLT, so as to allow the ONU to set a function synchronous with the OLT based on the synchronization information; and target management information is encapsulated into a target frame, and the target frame is sent to the ONU on a time slot in which the target frame is allowed to be sent by the OLT.

In an exemplary embodiment, the synchronization information is sent to the ONU by an OLT includes: a predetermined frame is sent to the ONU by the OLT. The predetermined frame is encapsulated with the synchronization information.

In an exemplary embodiment, the predetermined frame is sent to the ONU by the OLT includes at least one of the following: an Ethernet MAC frame is sent to the ONU by the OLT, where the Ethernet MAC frame is encapsulated with a synchronization header, and the synchronization header includes the synchronization information; a first encapsulation frame is sent to the ONU by the OLT, where the first encapsulation frame is encapsulated with the synchronization header, and the synchronization header includes the synchronization information; or a second encapsulation frame is sent to the ONU by the OLT, where the second encapsulation frame is encapsulated with the Ethernet MAC frame, the Ethernet MAC frame is encapsulated with the synchronization header, and the synchronization header includes the synchronization information.

In an exemplary embodiment, the synchronization header carries first standard indication information, the first standard indication information is used for indicating the standard of data that is currently transmitted, and the standard includes at least one of the following: an IEEE PON standard or an ITU-T PON standard.

In an exemplary embodiment, second standard indication information is recorded in a first specific domain of the first encapsulation frame, and the second standard indication information is used for indicating the standard of data that is currently transmitted.

In an exemplary embodiment, third standard indication information is recorded in a second specific domain of the second encapsulation frame, and the third standard indication information is used for indicating the standard of the data that is currently transmitted; the position of the first specific domain in the first encapsulation frame is the same as the position of the second specific domain in the second encapsulation frame, or the first encapsulation frame and the second encapsulation frame are encapsulated in a uniform encapsulation manner.

In an exemplary embodiment, when the OLT and the ONU are located in an IEEE PON, the synchronization header is determined based on at least one of the following synchronization headers: a first synchronization header in an ITU-T Gigabit PON (GPON); a second synchronization header in an ITU-T Ten-Gigabit PON (XG-PON); a third synchronization header in an ITU-T Time and Wavelength Division Multiplexing PON (TWDM-PON); or a fourth synchronization header in an ITU-T Higher Speed PON (HSP).

In an exemplary embodiment, the synchronization information is sent to the ONU by the OLT includes: the synchronization information is sent to the ONU by the OLT according to a fixed sending cycle.

In an exemplary embodiment, when the OLT and the ONU are located in an ITU-T PON, the target management information is encapsulated into the target frame by the OLT includes: the target management information is encapsulated into an XGEM frame by the OLT. The XGEM frame carries a specific Port ID, and first identifier information for identifying the target management information is recorded in the Port ID.

In an exemplary embodiment, the target management information is encapsulated into the XGEM frame by the OLT includes at least one of the following: one or more bandwidth entries included in the target management information is encapsulated into a first XGEM frame by the OLT; or one or more Physical Layer Operations Administration and Maintenance (PLOAM) messages included in the target management information is encapsulated into a second XGEM frame by the OLT.

In an exemplary embodiment, when the OLT and the ONU are located in an ITU-T PON, the target management information is encapsulated into the target frame by the OLT includes: the target management information is encapsulated into an XGEM frame by the OLT. The XGEM frame is used for encapsulating at least one of the following pieces of target information in a downlink synchronization block PSBd: physical synchronization PSync, a superframe number superframe counter, or a PON port number PON-ID. The XGEM frame carries a specific Port ID, and second identifier information for identifying the PSBd is recorded in the Port ID.

In an exemplary embodiment, the target frame is sent to the ONU on the time slot in which the target frame is allowed to be sent by the OLT includes: when it is detected that there is a target time slot, the target frame is sent to the ONU on a time slot after the target time slot by the OLT.

In an exemplary embodiment, the target time slot includes a sliced time slot.

In an exemplary embodiment, the target frame is sent to the ONU on the time slot in which the target frame is allowed to be sent by the OLT includes: when there are a plurality of target frames, the plurality of target frames are sent in a tight sending manner on the time slot in which the target frame is allowed to be sent. The tight sending manner is used for indicating the manner that the plurality of target frames are sent sequentially end-to-end.

In an exemplary embodiment, the method further includes: a superframe is sent to the ONU by the OLT. The superframe carries one or more downlink bandwidth allocations DS BWmap for distinguishing time slots of different standards, each DS BWmap is encapsulated in a GEM frame or an envelope frame included in the superframe, each bandwidth entry in each DS BWmap indicates a protocol type, start time and bandwidth length in the current superframe.

Another embodiment of the present invention provides a data transmission apparatus, applied to an OLT and including: a first sending module, configured to send synchronization information to an ONU, so as to allow the ONU to set a function synchronous with the OLT based on the synchronization information; and a second sending module, configured to encapsulate target management information into a target frame, and send the target frame to the ONU on a time slot in which the target frame is allowed to be sent.

Still another embodiment of the present invention further provides a computer readable storage medium, wherein the computer readable storage medium stores a computer program, and the computer program is configured to cause, when executed by a processor, the processor to perform steps in any one of the above method embodiments.

Still another embodiment of the present invention further provides an electronic apparatus. The electronic apparatus includes a memory and a processor, and a computer program that is stored in the memory and executable on the processor, wherein the processor is configured to execute the computer program to perform steps in any one of the above method embodiments.

### Brief Description of the Drawings

Fig. 1 is a PON architecture diagram in the related art.
Fig. 2 is a block diagram of a hardware structure of a mobile terminal of a data transmission method according to an embodiment of the present invention.
Fig. 3 is a flowchart of a data transmission method according to an embodiment of the present invention.
Fig. 4 is a schematic structural diagram of an XGEM frame according to an embodiment of the present invention.
Fig. 5 is a schematic structural diagram of an envelope frame header according to an embodiment of the present invention.
Fig. 6 is a schematic diagram of a downlink bandwidth allocation according to an embodiment of the present invention.
Fig. 7 is a block structural diagram of a data transmission apparatus according to an embodiment of the present invention.

### Detailed Description of the Embodiments

The embodiments of the present invention are described below in detail with reference to the drawings and the embodiments.

It is to be noted that terms "first", "second" and the like in the description, claims and the above mentioned drawings of the present invention are used for distinguishing similar objects rather than describing a specific sequence or a precedence order.

The related technology that may be involved in the present invention is first described.

In the related art, from the perspective of cost savings, unified operation and maintenance, market and standards organizations have proposed the concept of fusion of a PON system, i.e., an IEEE PON series and an ITU-T PON series can be made into one standard and a set of system, so as to achieve the purpose of reducing costs and simplifying operation and maintenance, such that calls for fusion in PONs grows higher and higher.

The most intuitive implementation of PON fusion is to use the same standard for the IEEE PON series and ITU-T PON series, for example, at a time when the IEEE NGEPON standardization is basically taking shape and 50G-PON related standardization of ITU-T is just starting to take shape, the adoption of Next Generation Ethernet Passive Optical Network (NGEPON) physical layers and protocol layers are discussed. However, the IEEE PON series and the ITU-T PON series have been standardized over a number of generations and there are specific differences in standardization. For example, the IEEE PON series is sent in a downlink direction in a burst-like manner, and frames are independent with each other in the downlink direction; while the ITU-T PON series is sent in the downlink direction in a continuous manner, and the frames are sent by being bound in a superframe. For another example, the ITU-T PON series has a 125 microsecond allocation cycle and timing, and is better in terms of timing, delay, and efficiency, etc., but the IEEE PON series does not have similar characteristics. Therefore, the fusion of the IEEE PON series and the ITU-T PON series is more likely to be a fusion of respective advantages of the series to form a unified standard. For example, the IEEE PON series and the ITU-T PON series may use the same physical layer, including a wave length, emission light power, receiving sensitivity, etc., and the protocol layer is basically the same, but there may be differences in line rate, coding, Forward Error Correction (FEC), encapsulation, and so on. That is to say, the protocol layer involves more concepts and cannot be simply fused.

Frame structure characteristics and differences of PONs in the ITU-T and IEEE series are analyzed below, so as to provide a foundation for solving fusion and slicing.

The downlink of an ITU-T PON sends one superframe every 125 microseconds in a manner of continuously sending the superframes; each superframe header is a Physical Synchronization Block downstream (PSBd), and the forefront of the PSBd includes a 8-byte PSync physical synchronization header. The physical synchronization header sent at regular intervals facilitates common time reference information of an OLT and an ONU. For an ITU-T PON, a 10-Gigabit passive optical network encapsulation method (XG-PON encapsulation method, XGEM) frames for data transmission are sent in a end-to-end continuous manner with no interval between them, which is more efficient. In the ITU-T PON, a downlink superframe and an uplink superframe carry management information at a fixed position; when a slice function is introduced, a slice cannot be transmitted at the fixed position, leading to larger slicing delay or larger delay jitter.

Using the IEEE PON as an example, a frame structure follows an Ethernet MAC frame structure, there is frame spacing between frames, and no constraints between the frames, making it more flexible. However, frame spacing leads to bandwidth efficiency reduction. When the IEEE PON reaches an NGEPON, an envelope encapsulation mode starts to be introduced, such that different Ethernet frames can be continuously sent, thereby improving bandwidth efficiency. However, in the PON of the IEEE series, data is sent via sending manner of Ethernet packets or envelopes, and there is a lack of a common reference moment between the OLT and the ONU.

In view of the above problems in the related art, the embodiments of the present invention provide a PON fusion architecture, such that the fusion of different standards of PONs can be realized while the respective advantages of the PONs can be maintained. Under the fusion architecture, a slide implementation method is provided, so as to realize lower slice delay and jitter. The present invention is described below with reference to embodiments.

The method embodiments provided in the embodiments of the present invention may be executed in a mobile terminal, a computer terminal or a similar computing apparatus. By being operated on the mobile terminal as an example, Fig. 2 is a block diagram of a hardware structure of a mobile terminal of a data transmission method according to an embodiment of the present invention. As shown in Fig. 2, the mobile terminal may include one or more (only one is shown in Fig. 2) processors 202 (the processor 202 may include, but is not limited to, a processing apparatus such as a microprocessor MCU or a programmable logic device FPGA) and a memory 204 configured to store data. The above mobile terminal may further include a transmission device 206 configured to achieve a communication function, and an input/output device 208. Those skilled in the art may understand that the structure shown in Fig. 2 is only a schematic diagram, which does not limit the structure of the above mobile terminal. For example, the mobile terminal may also include more or less components than those shown in Fig. 2, or have a different configuration from that shown in Fig. 2.

The memory 204 may be configured to store a computer program, for example, a software program and a module of application software, such as a computer program corresponding to a data transmission method in the embodiments of the present invention. The processor 202 runs the computer program stored in the memory 204, so as to execute various functional applications and data processing, that is, to realize the above method. The memory 204 may include a high-speed random access memory, and may further include a non-volatile memory, such as one or more magnetic disk memory apparatuses, a flash memory device, or other non-volatile solid-state memory devices. In some embodiments, the memory 204 may further include memories remotely disposed relative to the processor 202. The remote memories may be connected to the mobile terminal by using a network. Examples of the above network include, but are not limited to, the Internet, an intranet, a local area network, a mobile communication network, and a combination thereof.

The transmission device 206 is configured to receive or send data via the network. The specific example of the above network may include a wireless network provided by a communication provider of the mobile terminal. In an example, the transmission device 206 includes a Network Interface Controller (NIC), and may be connected to other network devices by using a base station, so as to communicate with the Internet. In an example, the transmission device 206 is a Radio Frequency (RF) module, which is configured to communicate with the Internet in a wireless manner.

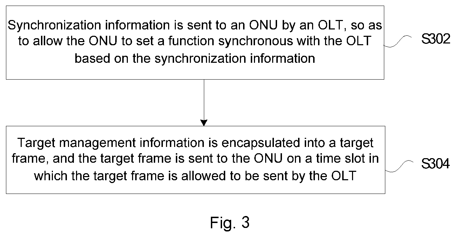

Fig. 3 is a flowchart of a data transmission method according to an embodiment of the present invention. As shown in Fig. 3, the flow includes the following steps.

At S302, synchronization information is sent to an ONU by an OLT, so as to allow the ONU to set a function synchronous with the OLT based on the synchronization information.

At S304, target management information is encapsulated into a target frame, and the target frame is sent to the ONU on a time slot in which the target frame is allowed to be sent by the OLT.

An execution subject of the above steps is the OLT, or other devices that can execute functions similar to the OLT.

In the above embodiments, the time slot in which the target frame is allowed to be sent may be a current idle time slot, or a time slot that is allocated for the sending of the target frame in advance, or may also be a time slot after avoiding a specific time slot. When the synchronization information is sent, the synchronization information may be sent according to a specific cycle, for example, sent every 125 microseconds, of course, may also be sent according to other sending cycles, for example, sent every 250 microseconds, every 500 microseconds, and so on.

In addition, an execution sequence of S302 and S304 is interchangeable, i.e., S304 may be first executed, and then S302 is executed. In addition, S302 and S304 may be executed at the same time.

By means of the above steps, the synchronization of the ONU and the OLT, as well as a flexible sending function of management information, are simultaneously realized in one system, such that the purpose of fusing the IEEE PON and the ITU-T PON is achieved. The fusion mode can realize the fusion of different standards of PONs, and also can maintain the respectively advantages of the PONs, such that the problems in the related art of high development costs and complex operations caused by the need of development of independent products and components for different standards of PONs are effectively solved, thereby achieving the effect of reducing the development costs and operation complexity.

In an exemplary embodiment, the synchronization information is sent to the ONU by the OLT includes: a predetermined frame is sent to the ONU by the OLT. The predetermined frame is encapsulated with the synchronization information. In this embodiment, there may be various types of predetermined frames, and the various types are respectively described below.

The predetermined frame is sent to the ONU by the OLT includes at least one of the following: an Ethernet MAC frame (or referred to as sending a timed Ethernet frame) is sent to the ONU by the OLT, where the Ethernet MAC frame is encapsulated with a synchronization header, and the synchronization header includes the synchronization information; a first encapsulation frame is sent to the ONU by the OLT, where the first encapsulation frame is encapsulated with the synchronization header, and the synchronization header includes the synchronization information; or a second encapsulation frame is sent to the ONU by the OLT, where the second encapsulation frame is encapsulated with the Ethernet MAC frame, the Ethernet MAC frame is encapsulated with the synchronization header, and the synchronization header includes the synchronization information.

In the above embodiments, the first encapsulation frame may include an XGEM frame, and the second encapsulation frame may include an envelope frame. It is to be noted that, the exact type of the encapsulation frame actually needs to be determined based on standard information. For example, a specific domain may be set at a specific position of the encapsulation frame, and different values are taken in the domain to distinguish whether it is the XGEM frame or the envelope frame. For example, redesign is performed at the highest bit of a Logical Link Identifier (LLID) domain in an IEEE envelope frame header; redesign is performed at the 9th bit of an Options domain in an ITU-T XGEM frame header; the positions of the two bits in the respective 8-byte frame header are the same; if the bit is 1, it is XGEM encapsulation; and if the bit is 0, it is envelope encapsulation. By means of the above embodiments, a downlink timing function in the ITU-T PON may be introduced into the IEEE PON, such that the IEEE PON supports the downlink timing function. In this embodiment, the timed Ethernet frames (which, of course, may be other types of frames, and the timed Ethernet frame is used as an example for description) may be increased; the synchronization information is carried in the timed Ethernet frames. Like the ITU-T PON, the IEEE PON sends the timed Ethernet frame once every certain period. When fusion with the ITU-T PON, the timed Ethernet frame is sent every 125 microseconds. Of course, if needed, the cycle may be modified to other time other than 125 microseconds. In addition, the synchronization information may be a synchronization header similar to the one defined in ITU-T, or may also be other synchronization information other than the synchronization header defined in the ITU-T PON.

In an exemplary embodiment, the synchronization header carries first standard indication information, the first standard indication information is used for indicating the standard of data that is currently transmitted, and the standard includes at least one of the following: an IEEE Passive Optical Network (PON) standard or an ITU-T PON standard. In this embodiment, current transmission under which standard may be specifically distinguished through information carried in the synchronization header, such that, during mixed transmission of the ITU-T PON and the IEEE PON, it can be distinguished which type of data is transmitted specifically. Of course, whether a uniform data encapsulation format is used may also be distinguished.

In an exemplary embodiment, second standard indication information is recorded in a first specific domain of the first encapsulation frame, and the second standard indication information is used for indicating the standard of data that is currently transmitted.

In an exemplary embodiment, third standard indication information is recorded in a second specific domain of the second encapsulation frame, and the third standard indication information is used for indicating the standard of the data that is currently transmitted; the position of the first specific domain in the first encapsulation frame is the same as the position of the second specific domain in the second encapsulation frame, or the first encapsulation frame and the second encapsulation frame are encapsulated in a uniform encapsulation manner. In this embodiment, according to the characteristics of the ITU-T PON, the synchronization header is sent every 125 microseconds. The synchronization header is encapsulated in an IEEE MAC frame and may further be encapsulated into the uniform data encapsulation format if needed. From the synchronization header, the mixed transmission of the ITU-T PON and the IEEE PON may be distinguished, and whether the uniform data encapsulation format is used may also be distinguished. The same data encapsulation format is used, such as ITU-T XGEM encapsulation or IEEE envelope encapsulation, or ITU-T XGEM encapsulation and IEEE envelope encapsulation are respectively preserved, as an XGEM frame header and an envelope frame header have the same size. When a uniform encapsulation mode is defined, a link identifier domain is included. A Port-ID of the ITU-T PON or an LLID of the IEEE PON is carried in the domain. The ITU-T PON Port-ID and the IEEE PON LLID have different value ranges; a Port-ID value is filled in the domain when an ITU-T PON frame is sent; and an LLID value is filled in the domain when an IEEE PON frame is sent. The receiving end ONU determines whether the value of the domain is allocated to the receiving end ONU, and if so, parses is performed according to a standard supported by the receiving end ONU, otherwise parse is not performed.

In an exemplary embodiment, when the OLT and the ONU are located in an IEEE PON, the synchronization header is determined based on at least one of the following synchronization headers: a first synchronization header in an ITU-T GPON; a second synchronization header in an ITU-T XG-PON; a third synchronization header in an ITU-T time division and wavelength division multiplexing passive optical network (TWDM-PON); or a fourth synchronization header in an ITU-T HSP. In the related art, in an IEEE PON system, the OLT regularly sends the synchronization header or a timed frame, such that the OLT and the ONU may own a common time reference point. In this embodiment, the synchronization header may further be encapsulated by using the Ethernet MAC frame, and 0xfffe is taken in a type/length domain. The synchronization header may set a length according to specific requirements, or the synchronization header in the ITU-T PON may also be used, such as a synchronization header in the GPON, a synchronization header in the XG-PON, a synchronization header in the TWDM-PON, a synchronization header in the HSP, etc.

In an exemplary embodiment, the synchronization information is sent to the ONU by the OLT includes: the synchronization information is sent to the ONU by the OLT according to a fixed sending cycle. As described in the above embodiments, when the synchronization information is sent, the synchronization information may be sent according to a specific cycle, for example, sent every 125 microseconds, of course, may also be sent according to other sending cycles, for example, sent every 250 microseconds, every 500 microseconds, and so on. In addition, the above sending cycle may be flexibly adjusted according to actual application.

In an exemplary embodiment, when the OLT and the ONU are located in an ITU-T PON, the target management information is encapsulated into the target frame by the OLT includes: the target management information is encapsulated into an XGEM frame by the OLT. The XGEM frame carries a specific Port ID, and first identifier information for identifying the target management information is recorded in the Port ID. In this embodiment, the management information of the fixed position in the ITU-T PON series may be encapsulated into the XGEM frame, and the XGEM frame carries the specific Port ID, for example, Port-ID=0xfe and 0xfd respectively represent BWmap (bandwidth mapping), a Physical Layer Operations Administration and Maintenance (PLOAM) message, etc. One or more BWmap entries may be sent in one XGEM frame, and a Payload Length Indicator (PLI) in the XGEM frame header is the length of the single entry multiplied by the number of entries. One or more PLOAM messages may be sent in one XGEM frame, and the PLI in the XGEM frame header is the length of the single PLOAM message multiplied by the number of messages. The BWmap entries and the PLOAM messages encapsulated in the XGEM are sent at an allowed position, changing the original manner that the above are sent together at the fixed position. Of course, if the physical synchronization (PSync), a superframe counter, and the PON port number PON-ID in the PSBd may all be encapsulated into a GEM frame, encapsulation Port-IDs thereof may be respectively 0xfa, 0xfb, and 0xfc. In this way, XGEM encapsulation becomes a uniform and flexible encapsulation mode of the ITU-T PON.

In an exemplary embodiment, the target management information is encapsulated into the XGEM frame by the OLT includes at least one of the following: one or more bandwidth entries included in the target management information is encapsulated into a first XGEM frame by the OLT; or one or more PLOAM messages included in the target management information is encapsulated into a second XGEM frame by the OLT. In this embodiment, the first XGEM frame and the second XGEM frame may be different frames. The target management information may include the bandwidth entries and/or PLOAM messages, and different types of management information may be encapsulated in different frames. Of course, in a practical application, if needed, it may also be considered that different pieces of management information are encapsulated into the same frame, and the present invention is not limited thereto.

In an exemplary embodiment, when the OLT and the ONU are located in an ITU-T PON, the target management information is encapsulated into the target frame by the OLT includes: the target management information is encapsulated into an XGEM frame by the OLT. The XGEM frame is used for encapsulating at least one of the following pieces of target information in a downlink synchronization block PSBd: physical synchronization (PSync), a superframe counter, or a PON port number PON-ID. The XGEM frame carries a specific Port ID (the Port ID and the Port ID mentioned in the above embodiments may be the same Port ID, or may also be a different Port ID), and second identifier information for identifying the PSBd is recorded in the Port ID.

In an exemplary embodiment, the target frame is sent to the ONU on the time slot in which the target frame is allowed to be sent by the OLT includes: when it is detected that there is a target time slot, the target frame is sent to the ONU on a time slot after the target time slot by the OLT. In this embodiment, a specific type of time slot needs to be preferably met, and the specific type of time slot may be predetermined. In this embodiment, the management information (corresponding to the target management information) sent at the fixed position may be encapsulated, and flexibly sent at different places. For example, the management information may be encapsulated and sent when it is ready. For another example, the management information is ready, but cannot be sent at the current time slot, and may be then sent until there is a time slot available for sending.

In an exemplary embodiment, the target time slot includes a sliced time slot. In this embodiment, a slice is generally a time slot that is specified for a specific user or a specific service, which are generally characterized by low delay and low delay jitter requirements, such that an interval between the sliced time slots is not greater than a delay threshold, which is to meet the low delay requirement. In addition, in order to meet the low delay jitter requirements, a change in the interval between the sliced time slots is not greater than a jitter threshold, such that the sliced time slots are generally uniformly or relatively-uniformly distributed. Therefore, when the target frame is sent, the placement of the sliced time slot needs to be preferably met. When the XGEM frame of the BWmap entry or the PLOAM message encounters the sliced time slot, sending may be adjusted later. In addition, in order to support the slice, the time slot for transmitting the target management information may be adjusted, and the content of the target management information may also be segmented and transmitted. In this way, the sliced time slot may be placed at a corresponding position according to the delay and jitter requirements.

In an exemplary embodiment, the target frame is sent to the ONU on the time slot in which the target frame is allowed to be sent by the OLT includes: when there are a plurality of target frames, the plurality of target frames is sent in a tight sending manner on the time slot in which the target frame is allowed to be sent by the OLT. The tight sending manner is used for indicating the manner that the plurality of target frames are sent sequentially end-to-end. In this embodiment, the management information and data (corresponding to the target management information) may be sent in a uniform or commonly-characterized encapsulation, and the encapsulation frame (corresponding to the target frame) may be connected end-to-end in a tight sending manner, such that high transmission efficiency is achieved, and the transmission efficiency can be improved.

In an exemplary embodiment, the method further includes: a superframe is sent to the ONU by the OLT. The superframe carries one or more downlink bandwidth allocations DS BWmap for distinguishing time slots of different standards, each DS BWmap is encapsulated in an XGEM frame or an envelope frame included in the superframe, each bandwidth entry in each DS BWmap indicates a protocol type, start time and bandwidth length in the current superframe.

The present invention is described below in reference with specific embodiments.

### Implementation I, for the IEEE PON:

In an IEEE PON system, the synchronization header or a timed frame is sent regularly by the OLT, such that the OLT and the ONU may own a common time reference point.

The synchronization header may further be encapsulated by using the Ethernet MAC frame, and 0xfffe is taken in a type/length domain. The synchronization header may set a length according to specific requirements, or the synchronization header in the ITU-T PON may also be used, such as a synchronization header in the GPON, a synchronization header in the XG-PON, a synchronization header in the TWDM-PON, a synchronization header in the HSP (or HSP-PON), etc.

The Ethernet MAC frame carrying the synchronization header may further be encapsulated into envelope.

The synchronization header or timed frame is sent according to a certain cycle; 125 microseconds in the ITU-T PON may be used as a cycle; and other time may also be used as a cycle.

The synchronization header or timed frame is received by the ONU, and a function synchronous with the OLT is set, for example, a time reference point, a frame parse starting point, etc.

### Implementation II, for the ITU-T PON:

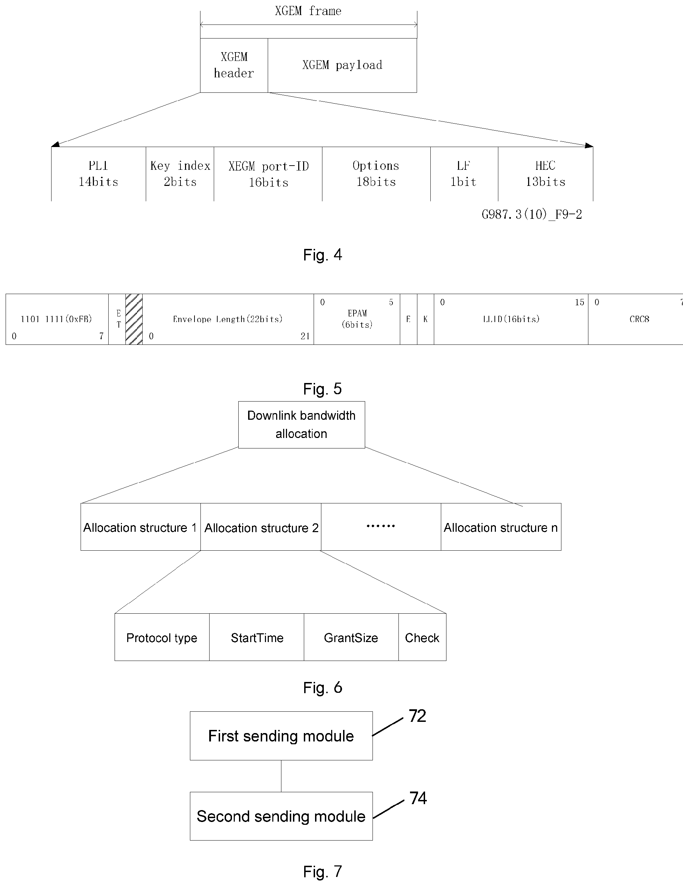

The management information of the fixed position in the ITU-T PON series is encapsulated into the XGEM frame, a structure of the XGEM frame is shown in Fig. 4, and the XGEM frame carries the specific Port ID, for example, Port-ID=0xfe and 0xfd respectively represent BWmap, a PLOAM message, etc. One or more BWmap entries may be sent in one XGEM frame, and a PLI in the XGEM frame header is the length of the single entry multiplied by the number of entries. One or more PLOAM messages may be sent in one XGEM frame, and the PLI in the XGEM frame header is the length of the single PLOAM message multiplied by the number of messages. The BWmap entries and the PLOAM messages encapsulated in the XGEM are sent at a required position, changing the original manner that the above are sent together at the fixed position.

Of course, if the physical synchronization PSync, the superframe counter, and the PON port number PON-ID in the PSBd may all be encapsulated into an XGEM frame, encapsulation Port-IDs thereof may be respectively 0xfa, 0xfb, and 0xfc. In this way, XGEM encapsulation becomes a uniform and flexible encapsulation mode of the ITU-T PON.

### Implementation III, for ITU-T PON slice support:

A slice is generally a time slot that is specified for a specific user or a specific service, which are generally characterized by low delay and low delay jitter requirements, such that an interval between the sliced time slots is not greater than a delay threshold, which is to meet the low delay requirement. In addition, in order to meet the low delay jitter requirements, a change in the interval between the sliced time slots is not greater than a jitter threshold, such that the sliced time slots are generally uniformly or relatively-uniformly distributed.

On the basis of Implementation II, the placement of the sliced time slot is be preferably met. When the XGEM frame of the BWmap entry or the PLOAM message encounters the sliced time slot, sending may be adjusted later.

### Implementation IV, for IEEE PON and ITU-T PON mixed transmission:

In this implementation, on the basis of Implementation I and Implementation II, Implementation I and Implementation II are implemented at the same time.

Data of the ITU-T PON and the IEEE PON is mixed for transmission, and sent within different time slots. In order to allow a receiving end to be able to identify, data sending and receiving durations of two standards are distinguished and separated by means of bandwidth allocation. In this implementation, two standard PONs use uniform uplink and downlink wave lengths, and may have uniform or non-uniform line rates, line coding, and FEC.

According to the characteristics of the ITU-T PON, the synchronization header is sent every 125 microseconds. The synchronization header is encapsulated in an IEEE MAC frame and may further be encapsulated into the uniform data encapsulation format if needed. From the synchronization header, the mixed transmission of the ITU-T PON and the IEEE PON may be distinguished, and whether the uniform data encapsulation format is used may also be distinguished.

The same data encapsulation format is used, such as ITU-T XGEM encapsulation or IEEE envelope encapsulation, or ITU-T XGEM encapsulation and IEEE envelope encapsulation are respectively preserved, as an XGEM frame header and an envelope frame header (an envelope frame header structure may be referred to Fig. 5) have the same size. A specific domain may be set at the same position, and different values are taken in the domain to distinguish whether it is the XGEM frame or the envelope frame. For example, redesign is performed at the highest bit of an LLID domain in an IEEE envelope frame header; redesign is performed at the 9th bit of an Options domain in an ITU-T XGEM frame header; the positions of the two bits in the respective 8-byte frame header are the same; if the bit is 1, it is XGEM encapsulation; and if the bit is 0, it is envelope encapsulation.

When a uniform encapsulation format is defined, a link identifier domain is included, and configured to bear a Port-ID of the ITU-T PON or an LLID of the IEEE PON. The ITU-T PON Port-ID and the IEEE PON LLID have different value ranges; a Port-ID value is filled in the domain when an ITU-T PON frame is sent; and an LLID value is filled in the domain when an IEEE PON frame is sent. The receiving end ONU determines whether the value of the domain is allocated to the receiving end ONU, and if so, parses is performed according to a standard supported by the receiving end ONU, otherwise parses is not performed.

In addition, downlink bandwidth allocation is implemented. The downlink bandwidth allocation is provided by the OLT, and the downlink bandwidth allocation can be identified by the ONU. The downlink bandwidth allocation indicates which parts of the downlink are ITU-T PON protocols and which parts are IEEE PON protocols.

In a downlink superframe, one or more downlink bandwidth allocations downstream bandwidth map (DS BWmap) are carried, each DS BWmap is encapsulated in an XGEM frame or an envelope frame, each bandwidth entry in the DS BWmap indicates a protocol type, start time and bandwidth length in the current superframe. A schematic diagram of the downlink bandwidth allocation may be referred to Fig. 6.

Through the definition of the upstream bandwidth map (US BWmap), the DS BWmap entry includes the following domains.
Protocol type: identifying which protocol type the downlink bandwidth is allocated to (or may be an ONU identifier, such as ONU-ID/PLID, orT-CONT/LLID).
StartTime: indicating start time of the downlink bandwidth.
GrantSize: identifying the length of the downlink bandwidth.
Check: Header Error Control (HEC) or Cyclic Redundancy Check (CRC) check bytes.

From the above descriptions about the implementation modes, those skilled in the art may clearly know that the method according to the foregoing embodiments may be implemented in a manner of combining software and a necessary universal hardware platform, and of course, may also be implemented through hardware, but the former is a preferred implementation mode under many circumstances. Based on such an understanding, the technical solutions of the present invention substantially or parts making contributions to the conventional art may be embodied in form of software product, and the computer software product is stored in a storage medium (for example, a ROM/RAM), a magnetic disk and an optical disk), including a plurality of instructions configured to enable a terminal device (which may be a mobile phone, a computer, a server, a network device, or the like) to execute the method in each embodiment of the present invention.

This embodiment further provides a data transmission apparatus. The apparatus is configured to implement the foregoing embodiments and the preferred implementation, and what has been described will not be described again. As used below, the term "module" may be a combination of software and/or hardware that implements a predetermined function. Although the apparatus described in the following embodiments is preferably implemented in software, but implementations in hardware, or a combination of software and hardware, are also possible and conceived.

Fig. 7 is a block structural diagram of a data transmission apparatus according to an embodiment of the present invention. The apparatus may be applied to an OLT. As shown in Fig. 7, the apparatus includes a first sending module and a second sending module.

The first sending module 72 is configured to send synchronization information to an ONU, so as to allow the ONU to set a function synchronous with the OLT based on the synchronization information.

The second sending module 74 is configured to encapsulate target management information into a target frame, and send the target frame to the ONU on a time slot in which the target frame is allowed to be sent.

In an exemplary embodiment, the first sending module 72 is configured to send the synchronization information through the following manner: sending a predetermined frame to the ONU, where the predetermined frame is encapsulated with the synchronization information.

In an exemplary embodiment, the first sending module 72 is configured to achieve the operation of sending the predetermined frame through at least one of the following manners: sending an Ethernet MAC frame to the ONU, where the Ethernet MAC frame is encapsulated with a synchronization header, and the synchronization header includes the synchronization information; sending a first encapsulation frame to the ONU, where the first encapsulation frame is encapsulated with the synchronization header, and the synchronization header includes the synchronization information; or sending a second encapsulation frame to the ONU, where the second encapsulation frame is encapsulated with the Ethernet MAC frame, the Ethernet MAC frame is encapsulated with the synchronization header, and the synchronization header includes the synchronization information.

In an exemplary embodiment, the synchronization header carries first standard indication information, the first standard indication information is used for indicating the standard of data that is currently transmitted, and the standard includes at least one of the following: an IEEE PON standard or an ITU-T PON standard.

In an exemplary embodiment, second standard indication information is recorded in a first specific domain of the first encapsulation frame, and the second standard indication information is used for indicating the standard of data that is currently transmitted.

In an exemplary embodiment, third standard indication information is recorded in a second specific domain of the second encapsulation frame, and the third standard indication information is used for indicating the standard of the data that is currently transmitted; the position of the first specific domain in the first encapsulation frame is the same as the position of the second specific domain in the second encapsulation frame, or the first encapsulation frame and the second encapsulation frame are encapsulated in a uniform encapsulation manner.

In an exemplary embodiment, when the OLT and the ONU are located in an IEEE PON, the synchronization header is determined based on at least one of the following synchronization headers: a first synchronization header in an ITU-T GPON; a second synchronization header in an ITU-T XG-PON; a third synchronization header in an ITU-T TWDM-PON; or a fourth synchronization header in an ITU-T HSP.

In an exemplary embodiment, the first sending module 72 is configured to send the synchronization information through the following manner: sending the synchronization information to the ONU according to a fixed sending cycle.

In an exemplary embodiment, the second sending module 74 is configured to encapsulate the target management information into the target frame through the following manner: when the OLT and the ONU are located in an ITU-T PON, encapsulating the target management information into an XGEM frame. The XGEM frame carries a specific Port ID, and first identifier information for identifying the target management information is recorded in the Port ID.

In an exemplary embodiment, the second sending module 74 is configured to encapsulate the target management information into the XGEM frame through at least one of the following manners: encapsulating one or more bandwidth entries included in the target management information into a first XGEM frame; or encapsulating one or more PLOAM messages included in the target management information into a second XGEM frame.

In an exemplary embodiment, the second sending module 74 is configured to encapsulate the target management information into the target frame through the following manner: when the OLT and the ONU are located in an ITU-T PON, encapsulating the target management information into an XGEM frame. The XGEM frame is used for encapsulating at least one of the following pieces of target information in a downlink synchronization block PSBd: physical synchronization (PSync), a superframe counter, or a PON port number PON-ID. Second identifier information for identifying the PSBd is recorded in the Port ID.

In an exemplary embodiment, the second sending module 74 is configured to send the target frame to the ONU on the time slot in which the target frame is allowed to be sent through the following manner: when it is detected that there is a target time slot, sending the target frame to the ONU on a time slot after the target time slot.

In an exemplary embodiment, the target time slot includes a sliced time slot.

In an exemplary embodiment, the second sending module 74 is configured to send the target frame to the ONU on the time slot in which the target frame is allowed to be sent through the following manner: when there are a plurality of target frames, sending the plurality of target frames in a tight sending manner on the time slot in which the target frame is allowed to be sent. The tight sending manner is used for indicating the manner that the plurality of target frames are sent sequentially end-to-end.

In an exemplary embodiment, the apparatus is further configured to send a superframe to the ONU. The superframe carries one or more downlink bandwidth allocations DS BWmap for distinguishing time slots of different standards, each DS BWmap is encapsulated in a GEM frame or an envelope frame included in the superframe, each bandwidth entry in each DS BWmap indicates a protocol type, start time and bandwidth length in the current superframe.

It is to be noted that, each of the above modules may be implemented by software or hardware. For the latter, it may be implemented in the following manners, but is not limited to the follow: the above modules are all located in a same processor; or the above modules are located in different processors in any combination.

Embodiments of the present invention further provide an OLT. The OLT includes the data transmission apparatus described in any one of the above.

An embodiment of the present invention further provides a computer readable storage medium, wherein the computer readable storage medium stores a computer program, and the computer program is configured to cause, when executed by a processor, the processor to perform steps in any one of the above method embodiments are executed when the computer program is configured to operate.

In an exemplary embodiment, the computer-readable storage medium may include, but is not limited to, a USB flash disk, a Read-Only Memory (ROM), a Random Access Memory (RAM), and various media that can store computer programs, such as a mobile hard disk, a magnetic disk, or an optical disk.

This embodiment of the present invention further provides an electronic apparatus. The electronic apparatus includes a memory and a processor, and a computer program that is stored in the memory and executable on the processor, wherein the processor is configured to execute the computer program to perform steps in any one of method embodiments described above.

In an exemplary embodiment, the electronic apparatus may further include a transmission device and an input/output device. The transmission device is connected to the processor. The input/output device is connected to the processor.

For specific examples in this embodiment, refer to the examples described in the foregoing embodiments and the exemplary implementations, and this embodiment will not be repeated thereto.

It is apparent that those skilled in the art should understand that the above mentioned modules or steps of the present invention may be implemented by a general computing device, and may also be gathered together on a single computing device or distributed in network composed of multiple computing devices. The above mentioned modules or steps of the present application may be implemented with program codes executable by the computing device, so that may be stored in a storage device for execution by the computing device, and in some cases, the steps shown or described may be performed in a different sequence than herein, or can be fabricated into individual integrated circuit modules respectively, or multiple modules or steps thereof are fabricated into a single integrated circuit module for implementation. In this way, the present invention are not limited to any specific combination of hardware and software.

The above are only the preferred embodiments of the invention and are not intended to limit the invention. For those skilled in the art, the invention may have various modifications and variations. Any modifications, equivalent replacements, improvements and the like made within the principle of the invention shall fall within the scope of protection of the present invention.

## Claims

1. A data transmission method, comprising:
sending, by an Optical Line Terminal ,OLT, synchronization information to an Optical Network Unit ,ONU, so as to allow the ONU to set a function synchronous with the OLT based on the synchronization information; and
encapsulating, by the OLT, target management information into a target frame, and sending the target frame to the ONU on a time slot in which the target frame is allowed to be sent.

2. The method according to claim 1, wherein sending, by the OLT, the synchronization information to the ONU comprises:
sending, by the OLT, a predetermined frame to the ONU, wherein the predetermined frame is encapsulated with the synchronization information.

3. The method according to claim 2, wherein sending, by the OLT, the predetermined frame to the ONU comprises at least one of the following:
sending, by the OLT, an Ethernet Media Access Control ,MAC, frame to the ONU, wherein the Ethernet MAC frame is encapsulated with a synchronization header, and the synchronization header comprises the synchronization information;
sending, by the OLT, a first encapsulation frame to the ONU, wherein the first encapsulation frame is encapsulated with the synchronization header, and the synchronization header comprises the synchronization information; or
sending, by the OLT, a second encapsulation frame to the ONU, wherein the second encapsulation frame is encapsulated with an Ethernet MAC frame, the Ethernet MAC frame is encapsulated with the synchronization header, and the synchronization header comprises the synchronization information.

4. The method according to claim 3, wherein the synchronization header carries first standard indication information, the first standard indication information is used for indicating the standard of data that is currently transmitted, and the standard comprises at least one of the following:
an Institute for Electrical and Electronics Engineers ,IEEE, Passive Optical Network ,PON, standard or an International Telecommunications Union-Telecommunications standardization sector ,ITU-T, PON standard.

5. The method according to claim 3, wherein second standard indication information is recorded in a first specific domain of the first encapsulation frame, and the second standard indication information is used for indicating the standard of data that is currently transmitted.

6. The method according to claim 5, wherein third standard indication information is recorded in a second specific domain of the second encapsulation frame, and the third standard indication information is used for indicating the standard of the data that is currently transmitted, wherein the position of the first specific domain in the first encapsulation frame is the same as the position of the second specific domain in the second encapsulation frame, or the first encapsulation frame and the second encapsulation frame are encapsulated in a uniform encapsulation manner.

7. The method according to claim 3, wherein, when the OLT and the ONU are located in an IEEE PON, the synchronization header is determined based on at least one of the following synchronization headers:
a first synchronization header in an ITU-T Gigabit PON ,GPON;
a second synchronization header in an ITU-T Ten-Gigabit PON XG-PON;
a third synchronization header in an ITU-T Time and Wavelength Division Multiplexing PON ,TWDM-PON; or
a fourth synchronization header in an ITU-T Higher Speed PON ,HSP.

8. The method according to claim 1, wherein sending, by the OLT, the synchronization information to the ONU comprises:
sending, by the OLT, the synchronization information to the ONU according to a fixed sending cycle.

9. The method according to claim 1, wherein, when the OLT and the ONU are located in an ITU-T PON, encapsulating, by the OLT, the target management information into the target frame comprises:
encapsulating, by the OLT, the target management information into an 10-Gigabit Passive Optical Network Encapsulation Method ,XGEM, frame, wherein the XGEM frame carries a specific Port ID, and first identifier information for identifying the target management information is recorded in the Port ID.

10. The method according to claim 9, wherein encapsulating, by the OLT, the target management information into the XGEM frame comprises at least one of the following:
encapsulating, by the OLT, one or more bandwidth entries comprised in the target management information into a first XGEM frame; or
encapsulating, by the OLT, one or more Physical Layer Operations Administration and Maintenance ,PLOAM, messages comprised in the target management information into a second XGEM frame.

11. The method according to claim 1, wherein, when the OLT and the ONU are located in an ITU-T PON, encapsulating, by the OLT, the target management information into the target frame comprises:
encapsulating, by the OLT, the target management information into an 10-Gigabit Passive Optical Network Encapsulation Method ,XGEM, frame, wherein the XGEM frame is used for encapsulating at least one of the following pieces of target information in a Physical Synchronization Block downstream ,PSBd:
physical synchronization ,PSync, a superframe counter, or a PON port number ,PON-ID;
wherein, the XGEM frame carries a specific Port ID, and second identifier information for identifying the PSBd is recorded in the Port ID.

12. The method according to claim 1, wherein sending, by the OLT, the target frame to the ONU on the time slot in which the target frame is allowed to be sent comprises:
when it is detected that there is a target time slot, sending, by the OLT, the target frame to the ONU on a time slot after the target time slot.

13. The method according to claim 12, wherein the target time slot comprises a sliced time slot.

14. The method according to claim 1, wherein sending, by the OLT, the target frame to the ONU on the time slot in which the target frame is allowed to be sent comprises:
when there are a plurality of target frames, sending, by the OLT, the plurality of target frames in a tight sending manner on the time slot in which the target frame is allowed to be sent, wherein the tight sending manner is used for indicating the manner that the plurality of target frames are sent sequentially end-to-end.

15. The method of claim 1, further comprising:
sending, by the OLT, a superframe to the ONU, wherein the superframe carries one or more downstream bandwidth map ,DS BWmap, for distinguishing time slots of different standards, each DS BWmap is encapsulated in an 10-Gigabit Passive Optical Network Encapsulation Method ,XGEM, frame or an envelope frame comprised in the superframe, each bandwidth entry in each DS BWmap indicates a protocol type, start time and bandwidth length in the current superframe.

16. A data transmission apparatus, applied to an Optical Line Terminal ,OLT, and comprising:
a first sending module, configured to send synchronization information to an Optical Network Unit ,ONU, so as to allow the ONU to set a function synchronous with the OLT based on the synchronization information; and
a second sending module, configured to encapsulate target management information into a target frame, and send the target frame to the ONU on a time slot in which the target frame is allowed to be sent.

17. A computer readable storage medium, wherein the computer readable storage medium stores a computer program, and the computer program is configured to cause, when executed by a processor, the processor to perform steps of the method as claimed in any one of claims 1 to 15.

18. An electronic apparatus, comprising a memory, a processor, and a computer program that is stored in the memory and executable on the processor, wherein the processor is configured to execute the computer program to perform steps of the method as claimed in any one of claims 1 to 15.
